(19) Europäisches Patentamt
European Patent Office
Office européen des brevets

(11) **EP 4 254 758 A1**

(12) **EUROPEAN PATENT APPLICATION**
published in accordance with Art. 153(4) EPC

(43) Date of publication:
**04.10.2023 Bulletin 2023/40**

(21) Application number: **21898291.6**

(22) Date of filing: **31.08.2021**

(51) International Patent Classification (IPC):
**H02M 3/00** *(2006.01)*    **H02M 1/14** *(2006.01)*
**H02J 3/32** *(2006.01)*    **H02J 7/00** *(2006.01)*
**H02M 1/00** *(2006.01)*

(52) Cooperative Patent Classification (CPC):
**H02J 3/32; H02J 7/00; H02M 1/00; H02M 1/14; H02M 3/00**

(86) International application number:
**PCT/KR2021/011656**

(87) International publication number:
**WO 2022/114464 (02.06.2022 Gazette 2022/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.11.2020 KR 20200160979**

(71) Applicant: **LG Innotek Co., Ltd.**
**Seoul 07796 (KR)**

(72) Inventors:
• **PARK, Heo Kyoung**
**Seoul 07796 (KR)**
• **NAM, Won Seok**
**Seoul 07796 (KR)**
• **LEE, Jong Hyun**
**Seoul 07796 (KR)**

(74) Representative: **DREISS Patentanwälte PartG mbB**
**Friedrichstraße 6**
**70174 Stuttgart (DE)**

(54) **DIRECT CURRENT/DIRECT CURRENT CONVERTER AND CONTROL METHOD THEREOF**

(57) According to an embodiment, the present invention may comprise: an input unit which receives a required power value and a reference voltage value from an inverter and receives a link voltage value from a direct current link capacitor; and a control unit which calculates a slope of a droop control curve according to the reference voltage value and the required power value, calculates an output power value by substituting a difference value between the link voltage value and the reference voltage value into the slope, and calculates a target current value according to the output power value.

FIG. 11

```
INPUT REQUIRED POWER VALUE ——— S1101
          ↓
INPUT REFERENCE VOLTAGE VALUE ——— S1102
          ↓
CALCULATE CHARGING/DISCHARGING
MODE DETERMINATION THRESHOLD VOLTAGE ——— S1103
          ↓
CALCULATE SLOPE ——— S1104
          ↓
INPUT LINK VOLTAGE VALUE ——— S1105
          ↓
CALCULATE OUTPUT POWER VALUE ——— S1106
          ↓
CALCULATE TARGET CURRENT VALUE ——— S1107
          ↓
OUTPUT TARGET CURRENT VALUE ——— S1108
```

EP 4 254 758 A1

# Description

[Technical Field]

One embodiment of the present invention relates to a direct current/direct current (DC/DC) converter and a control method thereof.

[Background Art]

Electric energy is easily converted and transmitted, and thus is widely used. In order to efficiently use this electric energy, an energy storage system (ESS) is used. The energy storage system receives power and charges the power in a battery. Further, when power is required, the energy storage system supplies the power by discharging the power charged in the battery. Accordingly, the energy storage system can flexibly supply power.

Specifically, a power supply system operates as follows when including the energy storage system. The energy storage system discharges electric energy stored in the battery when a load or system is in an overload. Further, when the load or system is in a light load, the energy storage system receives power from a power generation apparatus or system and charges the power in the battery.

In addition, when the energy storage system is present independently of the power supply system, the energy storage system receives idle power from an external power source and charges the idle power in the battery. In addition, when a system or load is in an overload, the energy storage system supplies the power by discharging the power charged in the battery.

This energy storage system performs droop control to improve stability during a charging operation or a discharging operation of the battery. Specifically, the energy storage system performs the droop control according to a charging state (SOC) of the battery. However, a conventional droop control method has a disadvantage that a charging and discharging voltage and a droop curve are fixed and thus an operation point of a DC/DC converter is changed only along the determined droop curve. Further, since power output is fixed at 0 in an idle section, there is a problem in that a non-response section is formed when the voltage falls or rises. In addition, there are problems in that discharging and idle driving cannot be performed when a link voltage is located in a charging voltage section, charging and the idle driving cannot be performed when the link voltage is located in a discharging voltage section, and the charging and discharging cannot be performed in the idle section.

[Disclosure]

[Technical Problem]

The present invention is directed to providing a direct current/direct current (DC/DC) converter capable of actively changing a droop control curve and an operation point, and a control method thereof.

Further, the present invention is directed to providing a DC/DC converter matched with inverters of various manufacturers of which operation areas are different, and thus having improved compatibility and control safety, and a control method thereof.

[Technical Solution]

According to an embodiment, a direct current/direct current (DC/DC) converter control method includes: receiving a required power value from an inverter; receiving a reference voltage value from the inverter; calculating a slope of a droop control curve according to the reference voltage value and the required power value; receiving a link voltage value from a direct current link capacitor; substituting a difference value between the link voltage value and the reference voltage value into the slope to calculate an output power value; and calculating a target current value according to the output power value.

The calculating of the slope of the droop control curve may include: calculating a right slope based on the reference voltage value; and calculating a left slope based on the reference voltage value.

The calculating of the right slope may include calculating the right slope of the droop control curve in which the reference voltage value and the required power value are operation points according to Equation 1 below.

[Equation 1]

$$Slope_1 = \frac{P_{H,Limit} - P_{set}}{V_{H,Limit} - V_{ref}}$$

In Equation 1, $Slope_1$ is the right slope of the droop control curve based on the reference voltage value, $P_{H,Limit}$ is a maximally charged power value, $V_{H,Limit}$ is a starting voltage value of maximally charged power, $P_{set}$ is the required power value received from the inverter, and $V_{ref}$ is the reference voltage value received from the inverter.

The calculating of the left slope may include calculating the left slope of the droop control curve in which the reference voltage value and the required power value are operation points according to Equation 2 below.

[Equation 2]

$$Slope_2 = \frac{P_{set} - P_{L,Limit}}{V_{ref} - V_{L,Limit}}$$

In Equation 2, Slope$_2$ is the left slope of the droop control curve based on the reference voltage value, $P_{L,Limit}$ is a maximally discharged power value, $V_{L,Limit}$ is a starting voltage value of maximally discharged power, $P_{set}$ is the required power value received from the inverter, and $V_{ref}$ is the reference voltage value received from the inverter.

The DC/DC converter control method may further include outputting the target current value to the battery.

According to an embodiment, a direct current/direct current (DC/DC) converter includes: an input unit configured to receive a required power value and a reference voltage value from an inverter and receive a link voltage value from a direct current link capacitor; and a control unit configured to calculate a slope of a droop control curve according to the reference voltage value and the required power value, substitute a difference value between the link voltage value and the reference voltage value into the slope to calculate an output power value, and calculate a target current value according to the output power value.

[Advantageous Effects]

According to a DC/DC converter of the present invention and a control method thereof, it is possible to change an operation point of the DC/DC converter.

Further, a delay according to a physical voltage fluctuation during a mode change can be removed.

In addition, charging, discharging, and idle driving are possible in all sections of an operation voltage.

In addition, response stability according to the voltage fluctuation can be improved in all sections of the operation voltage.

[Description of Drawings]

FIG. 1 is a view for describing a schematic configuration of a power supply system according to an embodiment.
FIG. 2 is a view for describing an energy storage system according to the embodiment.
FIG. 3 is a view for describing a direct current/direct current (DC/DC) converter according to the embodiment.
FIG. 4 is a control system block diagram according to the embodiment.
FIG. 5 is a view for describing a control unit according to the embodiment.
FIG. 6 is a view for describing a droop control curve of the energy storage system according to the embodiment.
FIG. 7 shows a voltage-power plane for describing an operation area of the control unit according to the embodiment.

FIG. 8 shows a voltage-power plane for describing an operation area of the control unit according to the embodiment.
FIG. 9 shows a voltage-power plane for describing an operation area of the control unit according to the embodiment.
FIG. 10 shows a voltage-power plane for describing an operation area of the control unit according to the embodiment.
FIG. 11 is an operational flow chart of a DC/DC converter control method according to the embodiment.
FIG. 12 is a view for describing an advantage of expanding the operation area related to proposed droop control compared to conventional droop control.

[Modes of the Invention]

Hereinafter, preferable embodiments of the present invention will be described in detail with reference to the accompanying drawings.

However, the technical spirit of the present invention is not limited to some embodiments which will be described and may be embodied in various forms, and one or more elements in the embodiments may be selectively combined and replaced to be used within the scope of the technical spirit of the present invention.

Further, terms used in the embodiments of the present invention (including technical and scientific terms), may be interpreted with meanings that are generally understood by those skilled in the art unless particularly defined and described, and terms which are generally used, such as terms defined in a dictionary, may be understood in consideration of their contextual meanings in the related art.

In addition, terms used in the description are provided not to limit the present invention but to describe the embodiments.

In the specification, the singular form may also include the plural form unless the context clearly indicates otherwise and may include one or more of all possible combinations of A, B, and C when disclosed as at least one (or one or more) of "A, B, and C."

In addition, terms such as first, second, A, B, (a), (b), and the like may be used to describe elements of the embodiments of the present invention.

These terms are only provided to distinguish the elements from other elements, and the essence, sequence, order, or the like of the elements are not limited by the terms.

Further, when particular elements are disclosed as being "connected," "coupled," or "linked" to other elements, the elements may include not only a case of being directly connected, coupled, or linked to other elements but also a case of being connected, coupled, or linked to other elements by elements between the elements and other elements.

In addition, when one element is disclosed as being formed "on or under" another element, the term "on or under" includes both a case in which the two elements are in direct contact with each other and a case in which at least another element is disposed between the two elements (indirect contact). Further, when the term "on or under" is expressed, a meaning of not only an upward direction but also a downward direction may be included based on one element.

Hereinafter, embodiments will be described in detail with reference to the accompanying drawings, and the same reference numerals are granted to the same or corresponding components regardless of the drawing numerals and overlapping descriptions thereof will be omitted

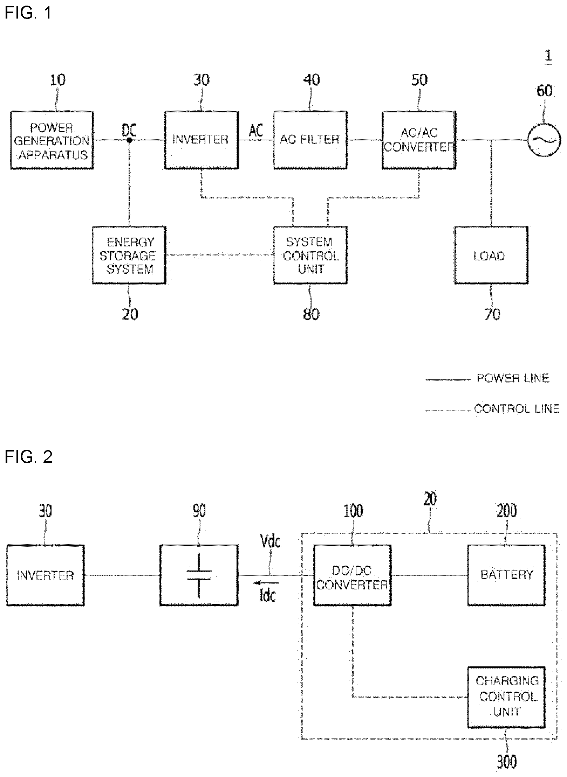

FIG. 1 is a view for describing a schematic configuration of a power supply system according to an embodiment. Referring to FIG. 1, a power supply system 1 according to the embodiment includes a power generation apparatus 10, an energy storage system 20, an inverter 30, an alternating current (AC) filter 40, an alternating current/alternating current (AC/AC) converter 50, a system 60, a system control unit 80, and a load 70.

The power generation apparatus 10 may produce electric energy. When the power generation apparatus 10 is a photovoltaic power generation system, the power generation apparatus 10 may be a solar cell array. The solar cell array is a combination of a plurality of solar cell modules. The solar cell module may be a device which converts solar energy to electric energy to generate predetermined voltage and current by connecting a plurality of solar cells in series or parallel. Accordingly, the solar cell array may absorb solar energy and convert the solar energy to the electric energy.

Further, when the power generation apparatus 10 is a wind power generation system, the power generation apparatus 10 may be a fan which converts wind energy to electric energy.

Meanwhile, the power generation apparatus 10 is not limited thereto, and may be configured as a tidal power generation system in addition to the photovoltaic power generation system and the wind power generation system. However, this is only an example, and the power generation apparatus 10 is not limited to the above-mentioned types, and may include all power generation systems which generate electric energy using new renewable energy such as solar heat, geothermal heat, or the like.

Further, the power supply system 1 may supply power only through the energy storage system 20 without the power generation apparatus 10.

In this case, the power supply system 1 may not include the power generation apparatus 10.

The inverter 30 may convert direct current (DC) power to AC power. More specifically, the DC power supplied by the power generation apparatus 10 or the DC power discharged by the energy storage system 20 may be converted to the AC power.

The AC filter 40 may filter a noise of the power converted to the AC power. Further, the AC filter 40 may be omitted according to the embodiment.

The AC/AC converter 50 may convert a magnitude of a voltage of the noisefiltered AC power so that the AC power may be supplied to the system 60 or the load 70, and may supply the converted AC power to the system 60 or the load 70. Further, the AC/AC converter 50 may be omitted according to the embodiment.

The system 60 is a system in which many power plants, substations, transmission and distribution lines, and loads are integrated and thus generation and use of electric power are performed.

The load 70 may receive electric energy from a power generation system such as the power generation apparatus 10 or the like or the energy storage system 20 to consume power.

The energy storage system (ESS) 20 may be charged by receiving electric energy from the power generation apparatus 10, and may discharge the charged electric energy according to a power supply and demand condition of the system 60 or the load 70. More specifically, when the system 60 or the load 70 is in a light load, the energy storage system 20 may receive idle power from the power generation apparatus 10 to perform charging. When the system 60 or the load 70 is in an overload, the energy storage system 20 may discharge the charged power to supply the power to the system 60 or the load 70. Further, the energy storage system 20 may be connected between the power generation apparatus 10 and the inverter 30 to be electrically connected to the power generation apparatus 10 and electrically connected to the inverter 30.

The system control unit 80 may control operations of the energy storage system 20, the inverter 30, and the AC/AC converter 50. More specifically, the system control unit 80 may control charging and discharging of the energy storage system 20. When the system 60 or the load 70 is in an overload, the system control unit 80 may control the energy storage system 20 to supply power and transfer the power to the system 60 or the load 70. When the system 60 or the load 70 is in a light load, the system control unit 80 may control an external power source or the power generation apparatus 10 to supply power and transmit the power to the energy storage system 20.

FIG. 2 is a view for describing the energy storage system according to the embodiment.

Referring to FIG. 2, the energy storage system 20 according to the embodiment may include a direct current/direct current (DC/DC) converter 100, a battery 200, and a charging control unit 300. The energy storage system 20 may be connected to the inverter 30 through a direct current link capacitor 90. That is, the direct current link capacitor 90 may be disposed between the energy storage system 20 and the inverter 30. Accordingly, the energy storage system 20 may receive a DC voltage Vdc of the direct current link capacitor 90 in a charging mode, and provide the DC voltage Vdc to the direct current link capacitor 90 in a discharging mode.

The battery 200 may receive charging power from the DC/DC converter 100 in the charging mode, and perform a charging operation using the received power. Further, the battery 200 may output previously stored power to the DC/DC converter 100 in the discharge mode. In addition, the battery 200 may include a plurality of battery cells to perform charging and discharging operations.

The charging control unit 300 may include a battery management system (BMS). The charging control unit 300 may provide battery state information on a state of the battery 200 to the system control unit 80. For example, the charging control unit 300 may monitor at least one or more of a voltage, a current, a temperature, a remaining power amount, and a charging state of the battery 200, and transmit the monitored state information of the battery 200 to the system control unit 80. Further, the charging control unit 300 may make the plurality of battery cells maintain an appropriate voltage while being charged or discharged. In addition, the charging control unit 300 may operate based on a control signal from the system control unit 80. In addition, the charging control unit 300 may control the DC/DC converter 100 according to the monitored state information of the battery 200. In addition, the charging control unit 300 may control the DC/DC converter 100 according to the charging mode or the discharging mode. More specifically, the charging control unit 300 may provide a charging control signal or a discharging control signal for controlling the DC/DC converter 100 to a converter control unit of the DC/DC converter 100, and the converter control unit of the DC/DC converter 100 may provide a pulse width modulation (PWM) signal to a switch of the DC/DC converter 100 based on the charging control signal or the discharging control signal. Further, the charging control unit 300 may control the DC/DC converter 100 to initially charge the direct current link capacitor 90 in the discharge mode of the battery 200. That is, the charging control unit 300 may provide an initial charging control signal for controlling the DC/DC converter 100 to the converter control unit of the DC/DC converter 100, and the converter control unit of the DC/DC converter 100 may provide an initial charging switch signal to the switch of the DC/DC converter 100 based on the initial charging control signal. Further, the charging control unit 300 may control the DC/DC converter 100 to improve power conversion efficiency of the DC/DC converter 100. More specifically, the charging control unit 300 may provide a power conversion efficiency control signal capable of improving the power conversion efficiency of the DC/DC converter 100 to the converter control unit of the DC/DC converter 100, and the converter control unit of the DC/DC converter 100 may provide the PWM signal to the switch of the DC/DC converter 100 based on the power conversion efficiency control signal.

The DC/DC converter 100 may convert a magnitude of the DC power received by the energy storage system 20 in the charging mode or supplied from the energy storage system 20 in the discharging mode. More specifically, the DC/DC converter 100 may convert the DC power provided to the direct current link capacitor 90 from the power generation apparatus 10 or the inverter 30 to a voltage magnitude for charging the battery 200 and provide the DC power to the battery 200. Further, the DC/DC converter 100 may convert the DC power provided from the battery 200 to a voltage magnitude usable by the inverter 30 and provide the DC power to the direct current link capacitor 90.

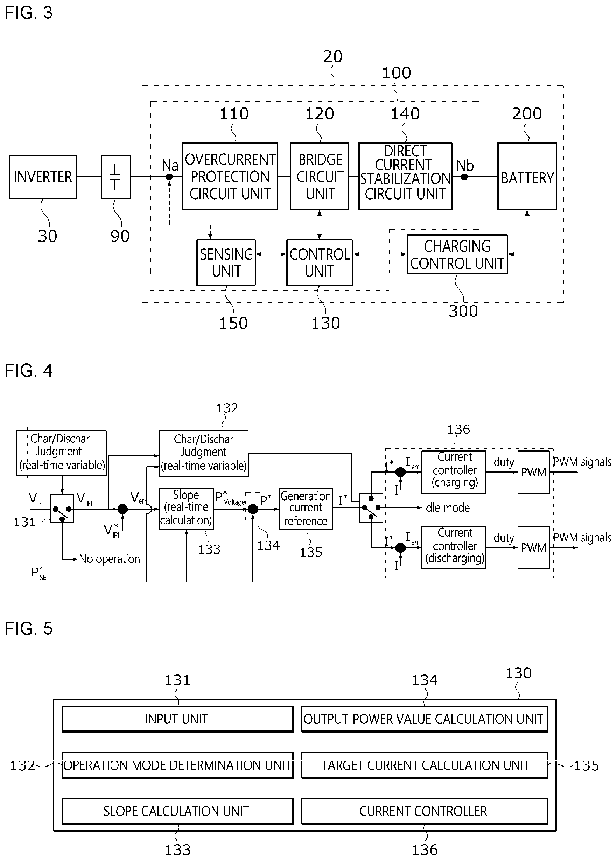

FIG. 3 is a view for describing the DC/DC converter according to the embodiment.

Referring to FIG. 3, the DC/DC converter 100 may convert a magnitude of the DC power received by the energy storage system 20 in the charging mode or supplied from the energy storage system 20 in the discharging mode. That is, the DC/DC converter 100 may be a bidirectional DC/DC converter. More specifically, the DC/DC converter 100 may convert the DC power provided to the direct current link capacitor 90 from the power generation apparatus 10 or the inverter 30 to a voltage magnitude for charging the battery 200 and provide the DC power to the battery 200. Further, the DC/DC converter 100 may convert the DC power provided from the battery 200 to a voltage magnitude usable by the inverter 30 and provide the DC power to the direct current link capacitor 90. In addition, the DC/DC converter 100 may operate in the charging mode, an idle operation mode, and the discharging mode based on a voltage provided from the direct current link capacitor 90. That is, the DC/DC converter 100 may monitor the voltage provided from the direct current link capacitor 90 even when a control signal is not provided by the charging control unit 300, determine whether to operate in the charging mode, the idle operation mode, and the discharging mode, and operate.

The DC/DC converter 100 may include an overcurrent protection circuit unit 110, a bridge circuit unit 120, a control unit 130, a direct current stabilization circuit unit 140, and a sensing unit 150.

The control unit 130 may control the bridge circuit unit 120. For example, the control unit 130 may generate a PWM signal based on the control signal provided from the charging control unit 300 and provide the PWM signal to the bridge circuit unit 120 including a switch. As another example, the control unit 130 may determine an operation mode and output power according to a magnitude of the voltage provided from the direct current link capacitor 90. Further, the control unit 130 may generate a PWM signal based on the determined output power and provide the PWM signal to the bridge circuit unit 120 including the switch. Detailed descriptions of another example will be described below.

The overcurrent protection circuit unit 110 may prevent electrical overstress (EOS) or overcurrent from being introduced into or discharged from the energy storage system 20. The overcurrent protection circuit unit 110 may be disposed between a first end Na to which the direct current link capacitor 90 is connected and the bridge circuit unit 120. Further, the overcurrent protection circuit unit 110 may include a circuit breaker. In this case, the overcurrent protection circuit unit 110 may open between the first end Na and the bridge circuit unit 120 when EOS or overcurrent is introduced into the energy storage system 20. Accordingly, the overcurrent protection circuit unit 110 may block input/output of an external current to/from the energy storage system 20.

The bridge circuit unit 120 may be disposed between the overcurrent protection circuit unit 110 and the direct current stabilization circuit unit 140 and electrically connected to each component. The bridge circuit unit 120 may drop the DC voltage of the DC power input from the overcurrent protection circuit unit 110 in a step-down mode and output the DC voltage to the direct current stabilization circuit unit 140. Further, the bridge circuit unit 120 may raise the DC voltage of the DC power input from the direct current stabilization circuit unit 140 in a step-up mode and output the DC voltage to the overcurrent protection circuit unit 110. The bridge circuit unit 120 may include one or more switches. For example, the bridge circuit unit 120 may be an insulated full bridge circuit. As another example, the bridge circuit unit 120 may be an uninsulated full bridge circuit. The present invention is not limited thereto, and the bridge circuit unit 120 may be configured as a half bridge circuit. The bridge circuit unit 120 may operate based on the PWM signal of the control unit 130.

The direct current stabilization circuit unit 140 may operate to raise the DC voltage in the step-up mode of the bridge circuit unit 120, and may operate to drop the DC voltage in the step-down mode. Further, the direct current stabilization circuit unit 140 may be an LC filter. The direct current stabilization circuit unit 140 may be connected to a second end Nb.

The sensing unit 150 may sense a voltage of the first end Na and provide the sensed voltage to the control unit 130. The voltage of the first end Na may be a DC voltage provided by the direct current link capacitor 90. Further, the sensing unit 150 may be controlled by the control unit 130.

Accordingly, in another embodiment, an operation mode of charging or discharging of the battery may be quickly determined. Further, in still another embodiment, a separate communication line and communication unit for droop control when the battery is charged or discharged are not required. In addition, in yet another embodiment, the quick droop control may be performed when the battery is charged or discharged.

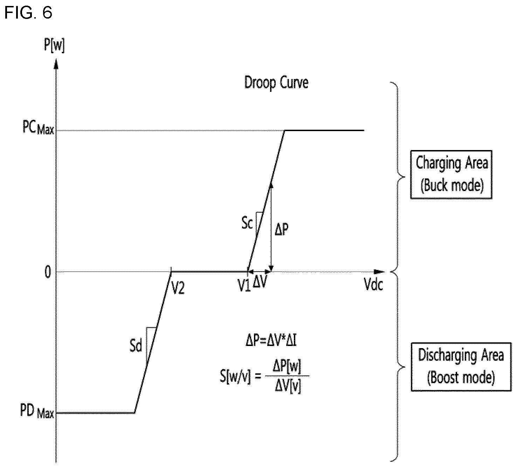

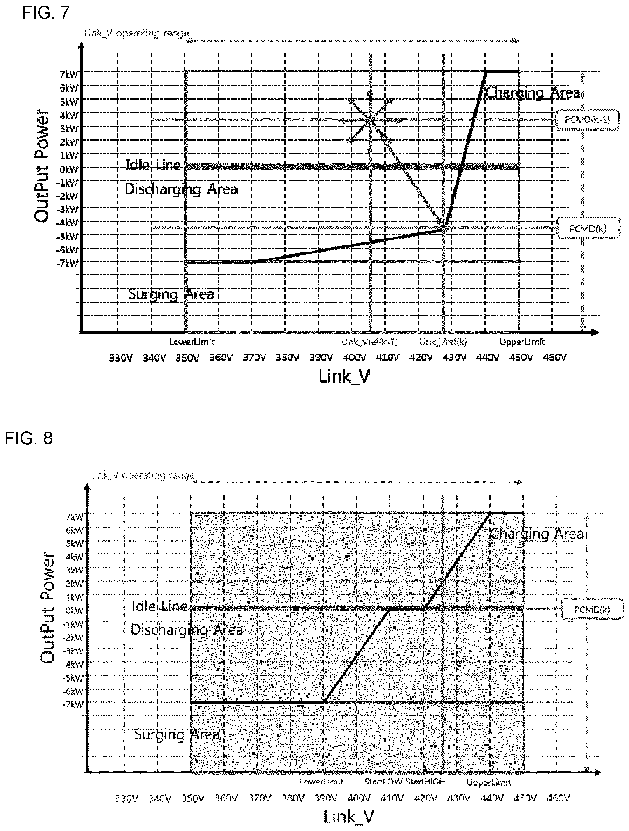

FIGS. 4 and 5 are views for describing the control unit according to the embodiment, FIG. 6 is a view for describing a droop control curve of the energy storage system according to the embodiment, FIG. 7 is a view for describing a target current determination unit in FIG. 5, and FIG. 8 is a view for describing a current controller in FIG. 5.

Referring to FIGS. 4 and 5, the control unit 130 of the DC/DC converter 100 according to the embodiment may include an input unit 131, an operation mode determination unit 132, a slope calculation unit 133, an output power value calculation unit 134, a target current calculation unit 135, and a current controller 136.

The input unit 131 may receive a required power value and a reference voltage value from the inverter and receive a link voltage value from the direct current link capacitor.

The operation mode determination unit 132 may determine an operation mode based on the required power value and the reference voltage value input from the inverter. More specifically, the control unit 130 may set a new operation point when receiving the required power value and the reference voltage value, and the operation mode determination unit 132 may set the operation mode according to the newly set operation point. For example, the operation mode determination unit 132 may calculate a threshold voltage which determines the charging mode or the discharging mode according to the reference voltage value and the required power value, and may determine the operation mode according to the threshold voltage. The operation mode determination unit 132 may set a voltage value corresponding to the operation point as the threshold voltage to determine an area in a right direction as a charging area and determine an area in a left direction as a discharging area with respect to the threshold voltage. That is, the input unit 131 and the operation mode determination unit 132 may perform setting and determination of an operation range by receiving an inverter operation area from the inverter. Further, the required power value may be received from the link voltage and the inverter, and accordingly, the charging operation mode or the discharging operation mode may be determined and output.

For example, the control unit 130 may newly calculate a slope of the droop control curve with respect to the newly set operation point, and the operation mode determination unit 132 may determine the charging mode, the discharging mode, or the idle operation mode by comparing the link voltage value and the operation point which are input later. For example, the operation mode determination unit 132 may determine the operation mode as the charging mode when the link voltage value is greater than or equal to the reference voltage value. Alternatively, the operation mode determination unit 132 may determine the operation mode as the discharging mode when the link voltage value is smaller than or equal to the reference voltage value. Alternatively, the operation mode determination unit 132 may determine the operation mode as the idle mode when the link voltage value is equal to the reference voltage value. FIG. 6 illustrates that the required power value of the inverter is 0 [W], and the reference voltage value according to the required power value is set as a default. However, as will be described below, the DC/DC converter 100 according to the embodiment sets the new operation point when receiving the required power value and the reference voltage value from the inverter, and the operation mode determination unit 132 sets the operation mode according to the newly set operation point.

Further, in FIG. 6, since the droop control curve includes maximum power, output power may be limited to the maximum power. Specifically, the maximum power may include maximally charged power PCMax and maximally discharged power PDMax. The maximally charged power PCMax may be a power value at which the output power may be maximized when the operation mode is the charging mode. The maximally discharged power PDMax may be a power value at which the output power may be maximized when the operation mode is the discharge mode.

Further, the operation mode determination unit 132 may determine the operation mode according to a voltage condition of the battery 200. More specifically, the operation mode determination unit 132 may operate in the charging mode when the voltage of the battery 200 is greater than or equal to a predetermined voltage.

As another example, the operation mode determination unit 132 may determine the operation mode and the output power according to a user's control. In this case, the user may determine the operation mode and the output power directly or using communication.

Further, the operation mode determination unit 132 may select any one example of one example, another example, and still another example to determine the operation mode and the output power.

The slope calculation unit 133 may calculate the slope of the droop control curve according to the reference voltage value and the required power value. The slope calculation unit 133 may calculate a right slope based on the reference voltage value, and calculate a left slope based on the reference voltage value.

The slope calculation unit 133 may calculate the right slope of the droop control curve in which the reference voltage value is an operation point according to Equation 1 below.

[Equation 1]

$$Slope_1 = \frac{P_{H,Limit} - P_{set}}{V_{H,Limit} - V_{ref}}$$

In Equation 1, $Slope_1$ is the right slope of the droop control curve based on the reference voltage value, $P_{H,Limit}$ is a maximally charged power value, $V_{H,Limit}$ is a starting voltage value of maximally charged power, $P_{set}$ is the required power value received from the inverter, and $V_{ref}$ is the reference voltage value received from the inverter.

Further, the slope calculation unit 133 may calculate the left slope of the droop control curve in which the reference voltage value is an operation point according to Equation 2 below.

[Equation 2]

$$Slope_2 = \frac{P_{set} - P_{L,Limit}}{V_{ref} - V_{L,Limit}}$$

In Equation 2, $Slope_2$ is the left slope of droop control curve based on the reference voltage value, $P_{L,Limit}$ is a maximally discharged power value, $V_{L,Limit}$ is a starting voltage value of maximally discharged power, $P_{set}$ is the required power value received from the inverter, and $V_{ref}$ is the reference voltage value received from the inverter.

In embodiment, the right slope of the droop control curve may refer to a charging power slope, and the left slope of the droop control curve may refer to a discharging power slope. The charging power slope and the discharging power slope may be different from each other, but are not limited thereto, and may be equal to each other.

The output power value calculation unit 134 may calculate the output power value by substituting a difference value between the link voltage value and the reference voltage value into the slope. The output power value calculation unit 134 may perform duty value compensation using a target current generation value and a feedback current. The output power value calculation unit 134 may calculate an output power value by multiplying a difference value acquired by subtracting the reference voltage value from the link voltage value by the left slope of the droop control curve in the discharging mode. Alternatively, the output power value calculation unit 134 may calculate an output power value by multiplying a difference value acquired by subtracting the link voltage value from the reference voltage value by the right slope of the droop control curve in the charging mode. Further, the output power value calculation unit 134 may generate a current command by reflecting a target power value to a droop control curve newly generated according to the calculated slope. That is, the current command may be generated by generating a power command according to the link voltage, and compensating for power command values according to the required power value and the reference voltage value of the inverter. The target current determination unit 135 may determine a target current based on the determined operation mode and output power. The target current determination unit 135 may determine a final duty using a basic duty value and a current-compensated duty value according to an input/output voltage. The target current determination unit 135 may receive operation mode output and switch the current command according to the mode.

The current controller 136 may output the target current value to the battery. The current controller 136 may include a charging current control unit 1361, a discharging current control unit 1363, and an idle control unit 1362, and each of the control units 1361 to 1363 may operate according to the output operation mode. The current controller 136 may generate a PWM signal which is a switching signal based on the determined target current.

FIG. 7 shows a voltage-power plane for describing an operation area of the control unit according to the embodiment. Referring to FIG. 7, the control unit according to the embodiment sets a new operation point when receiving the required power value and the reference voltage value from the inverter, and calculates a slope of the droop control curve according to the newly set operation point. The calculated slope may be reflected to the droop control curve to generate a new droop control curve, and the control unit may calculate the output power and the target current by substituting the link voltage value into the new droop control curve.

FIG. 8 shows a voltage-power plane for describing an operation area of the control unit according to the embodiment.

Referring to FIG. 8, the control unit may receive a required power value of 0 [W] from the inverter. Further, the input unit may receive a link voltage value of 400 [V] from the direct current link capacitor.

The control unit may calculate a right slope and a left slope of the droop control curve based on the reference voltage value according to the input required power value. In the embodiment, since the required power value is input as 0 [W], the slope of the droop control curve may be calculated as 350, which is an initially set value.

Next, the control unit may calculate the output power value by calculating a difference value between a reference voltage value of 410 [V] and a link voltage value of 400 [V] which are setting values, and substituting the calculated difference value into the previously calculated slope and adding up the calculated difference value and the required power value. The control unit may calculate the output power value by substituting the difference value into the left slope in the discharging mode, and may calculate the output power value by substituting the difference value into the right slope in the charging mode. In the embodiment, the control unit may calculate an output power value of -3500 [W] by adding up a value of -3500 [W], acquired by substituting the difference value into the calculated slope, and a required power value of 0 [W].

Next, the control unit may calculate the target current value by dividing the output power value by the battery voltage. In the embodiment, the control unit may calculate a target current value of -35 [A] by dividing an output power value of -3500 [W] by a battery voltage of 100 [V].

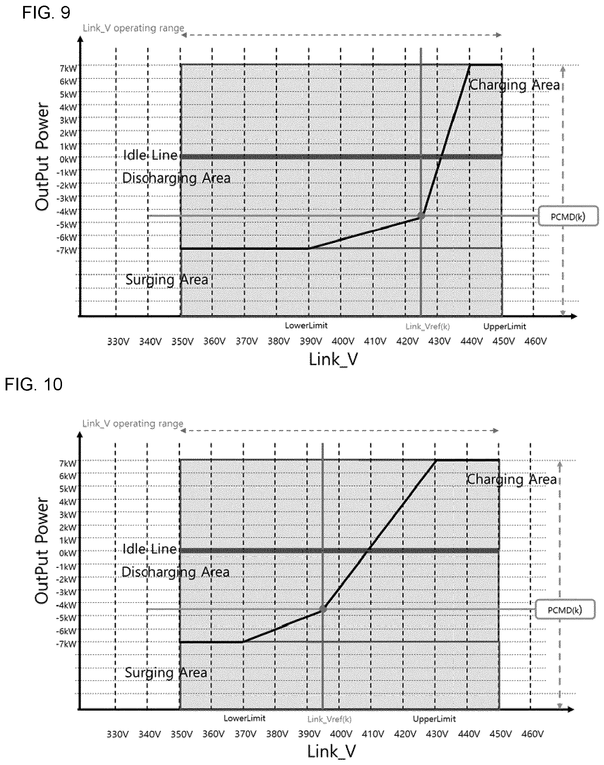

FIG. 9 shows a voltage-power plane for describing an operation area of the control unit according to the embodiment.

Referring to FIG. 9, the input unit may receive a required power value of - 4500 [W] from the inverter. Further, the input unit may receive a link voltage value of 425 [V] from the direct current link capacitor.

The control unit may calculate the right slope and the left slope of the droop control curve based on a reference voltage value of 425 [V] according to the input required power value. In the embodiment, the operation point may be changed according to the required power value and the reference voltage value, and the left slope of the droop control curve may be changed from 350 which is an initial setting value to 71.42 and reflected according to the changed operation point.

Next, the control unit may calculate the output power value by calculating a difference value between a reference voltage value of 425 [V] and a link voltage value of 425 [V] which are setting values, and substituting the calculated difference value into the previously calculated slope and adding up the calculated difference value and the required power value. The control unit may calculate the output power value by substituting the difference value into the left slope in the discharging mode, and may calculate the output power value by substituting the difference value into the right slope in the charging mode. In the embodiment, the control unit may calculate an output power value of -4500 [W] by adding up a value of 0 [W], acquired by substituting the difference value into the calculated slope, and a required power value of -4500 [W].

Next, the control unit may calculate the target current value by dividing the output power value by the battery voltage. In the embodiment, the control unit may calculate a target current value of -45 [A] by dividing an output power value of -4500 [W] by a battery voltage of 100 [V].

The control unit may output the calculated target current value to the battery.

Like the above, the DC/DC converter according to the embodiment may change the operation point of the DC/DC converter by receiving the required power value from the inverter to newly calculate the slope of the droop control curve, and calculating a current output to the battery according to the droop control curve to which the newly calculated slope is reflected. Further, a quick response is possible without a physical voltage fluctuation, and it is possible to perform driving of charging, discharging, and idle sections in all operation sections.

FIG. 10 shows a voltage-power plane for describing an operation area of the control unit according to the embodiment.

Referring to FIG. 10, the input unit may receive a required power value of - 4500 [W] from the inverter. Further, the input unit may receive a link voltage value of 425 [V] from the direct current link capacitor.

The control unit may calculate the right slope and the left slope of the droop control curve based on a reference voltage value of 395 [V] according to the input required power value. In the embodiment, the operation point may be changed according to the required power value and the reference voltage value, and the left slope of the droop control curve may be changed from 350 which is an initial setting value to 100 and reflected according to the changed operation point.

Next, the control unit may calculate the output power value by calculating a difference value between a reference voltage value of 395 [V] and a link voltage value of 425 [V] which are setting values, and substituting the calculated difference value into the previously calculated slope and adding up the calculated difference value and the required power value. The control unit may calculate the output power value by substituting the difference value into the left slope in the discharging mode, and may calculate the output power value by substituting the difference value into the right slope in the charging mode. In the embodiment, the control unit may calculate an output power value of -1500 [W] by adding up a value of 3000 [W] acquired by substituting a difference value of 30 [V] into the calculated slope 100, and a required power value of -4500 [W].

Next, the control unit may calculate the target current value by dividing the output power value by the battery voltage. In the embodiment, the control unit may calculate a target current value of -15 [A] by dividing an output power value of -1500 [W] by a battery voltage of 100 [V].

The control unit may output the calculated target current value to the battery.

Like the above, the DC/DC converter according to the embodiment may change the operation point of the DC/DC converter by receiving the required power value from the inverter to newly calculate the slope of the droop control curve, and calculating a current output to the battery according to the droop control curve to which the newly calculated slope is reflected. Further, a quick response is possible without a physical voltage fluctuation, and it is possible to perform driving of charging, discharging, and idle sections in all operation sections.

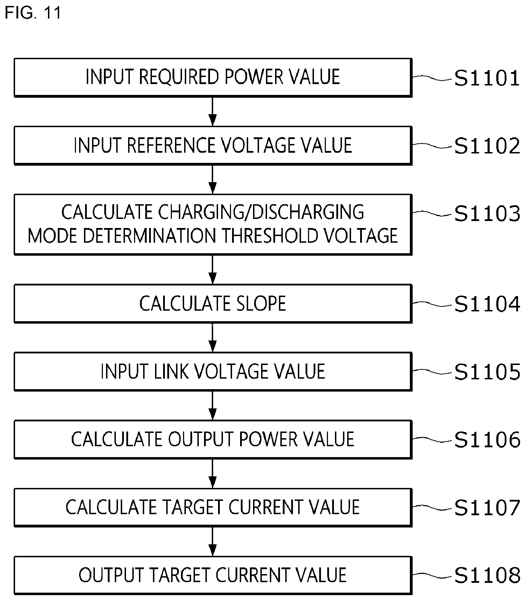

FIG. 11 is an operational flow chart of an operation of a DC/DC converter control method according to the embodiment. Referring to FIG. 11, first, an input unit may receive a required power value from an inverter (S1101).

Next, the input unit may receive a reference voltage value from the inverter (S1102).

Next, an operation mode determination unit may calculate a threshold voltage which determines a charging mode or a discharging mode according to the reference voltage value and the required power value (S1103).

Next, a control unit may calculate a slope of a droop control curve according to the reference voltage value and the required power value based on the threshold voltage (S1104).

Next, the input unit may receive a link voltage value from a direct current link capacitor (S1105).

Next, the control unit may calculate an output power value by substituting a difference value between the link voltage value and the reference voltage value into the slope (S1106).

Next, the control unit may calculate a target current value according to the output power value (S1107).

Next, the control unit may output the target current value to a battery (S1108).

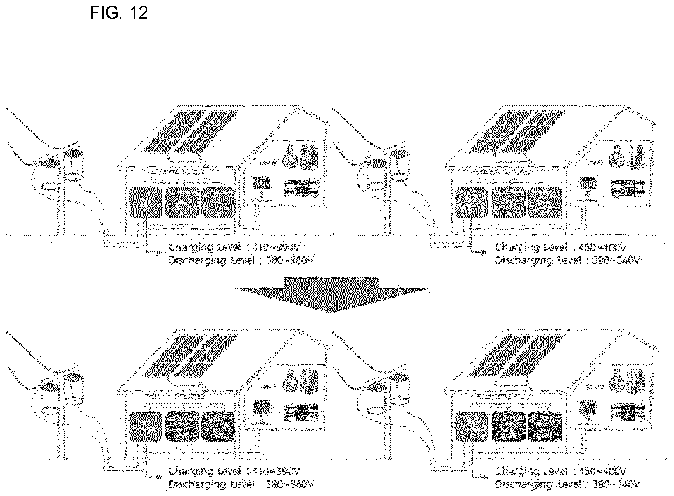

FIG. 12 is a view for describing an advantage of expanding the operation area related to the proposed droop control compared to conventional droop control.

Referring to FIG. 12, a conventional DC/DC converter has a disadvantage that a charging voltage and a discharging voltage are fixed for each inverter, and accordingly, a charging operation area and a discharging operation area are limited within a predetermined range. In comparison of this, since the DC/DC converter according to the embodiment newly calculates and applies a droop control curve in real time according to an operation point, and thus may be matched with inverters of various manufacturers of which operation areas are different, compatibility and control safety may be improved.

The term '-unit' used in the embodiment refers to software or a hardware component such as a field-programmable gate array (FPGA) or an applicationspecific integrated circuit (ASIC), and the '-unit' performs certain roles. However, the '-unit' is not a meaning limited to the software or hardware. The '-unit' may be configured to be present in an addressable storage medium, and may be configured to play one or more processors. Accordingly, for example, the '-unit' includes components such as software components, object oriented software components, class components, and task components, processes, functions, properties, procedures, subroutines, segments of program code, drivers, firmware, microcode, circuits, data, databases, data structures, tables, arrays, and variables. Functions provided in the components and the '-units' may be combined into a smaller number of components and '-units' or further separated into additional components and '-units'. Further, the components and the '-units' may be implemented to play one or more central processing units (CPUs) in a device or a security multimedia card.

Although the preferable embodiments of the present invention are described above, those skilled in the art may variously modify and change the present invention within the scope and spirit of the present invention disclosed in the following claims.

## Claims

1. A direct current/direct current (DC/DC) converter control method, comprising:

   receiving a required power value from an inverter;
   receiving a reference voltage value from the inverter;
   calculating a slope of a droop control curve according to the reference voltage value and the required power value;

calculating a threshold voltage which determines a charging mode or a discharging mode according to the reference voltage value and the required power value;

receiving a link voltage value from a direct current link capacitor;

substituting a difference value between the link voltage value and the reference voltage value into the slope to calculate an output power value; and

calculating a target current value according to the output power value.

2. The DC/DC converter control method of claim 1, wherein the calculating of the slope of the droop control curve includes:

calculating a right slope based on the reference voltage value; and

calculating a left slope based on the reference voltage value.

3. The DC/DC converter control method of claim 2, wherein the calculating of the right slope includes calculating the right slope of the droop control curve in which the reference voltage value and the required power value are operation points according to Equation 1 below.

[Equation 1]

$$Slope_1 = \frac{P_{H,Limit} - P_{set}}{V_{H,Limit} - V_{ref}}$$

(In Equation 1, $Slope_1$ is the right slope of the droop control curve based on the reference voltage value, $P_{H,Limit}$ is a maximally charged power value, $V_{H,Limit}$ is a starting voltage value of maximally charged power, $P_{set}$ is the required power value received from the inverter, and $V_{ref}$ is the reference voltage value received from the inverter.)

4. The DC/DC converter control method of claim 2, wherein the calculating of the left slope includes calculating the left slope of the droop control curve in which the reference voltage value and the required power value are operation points according to Equation 2 below.

[Equation 2]

$$Slope_2 = \frac{P_{set} - P_{L,Limit}}{V_{ref} - V_{L,Limit}}$$

(In Equation 2, $Slope_2$ is the left slope of the droop control curve based on the reference voltage value, $P_{L,Limit}$ is a maximally discharged power value, $V_{L,Limit}$ is a starting voltage value of maximally discharged power, $P_{set}$ is the required power value received from the inverter, and $V_{ref}$ is the reference voltage value received from the inverter.)

5. The DC/DC converter control method of claim 1, further comprising outputting the target current value to the battery.

6. A direct current/direct current (DC/DC) converter comprising:

an input unit configured to receive a required power value and a reference voltage value from an inverter and receive a link voltage value from a direct current link capacitor; and

a control unit configured to calculate a slope of a droop control curve according to the reference voltage value and the required power value, substitute a difference value between the link voltage value and the reference voltage value into the slope to calculate an output power value, and calculate a target current value according to the output power value.

7. The DC/DC converter of claim 6, wherein the control unit calculates a right slope based on the reference voltage value, and calculates a left slope based on the reference voltage value.

8. The DC/DC converter of claim 7, wherein the control unit calculates the right slope of the droop control curve in which the reference voltage value and the required power value are operation points according to Equation 3 below.

[Equation 3]

$$Slope_1 = \frac{P_{H,Limit} - P_{set}}{V_{H,Limit} - V_{ref}}$$

(In Equation 3, $Slope_1$ is the right slope of the droop control curve based on the reference voltage value, $P_{H,Limit}$ is a maximally charged power value, $V_{H,Limit}$ is a starting voltage value of maximally charged power, $P_{set}$ is the required power value received from the inverter, and $V_{ref}$ is the reference voltage value received from the inverter.)

9. The DC/DC converter of claim 7, wherein the control unit calculates the left slope of the droop control curve in which the reference voltage value and the required power value are operation points according to Equation 4 below.

[Equation 4]

$$Slope_2 = \frac{P_{set} - P_{L,Limit}}{V_{ref} - V_{L,Limit}}$$

(In Equation 4, $Slope_2$ is the left slope of the droop control curve based on the reference voltage value, $P_{L,Limit}$ is a maximally discharged power value, $V_{L,Limit}$ is a starting voltage value of maximally discharged power, $P_{set}$ is the required power value received from the inverter, and $V_{ref}$ is the reference voltage value received from the inverter.)

10. The DC/DC converter of claim 6, wherein the control unit outputs the target current value to the battery.

FIG. 1

POWER LINE
CONTROL LINE

FIG. 2

FIG. 3

FIG. 4

FIG. 5

FIG. 6

$$\Delta P = \Delta V * \Delta I$$

$$S[w/v] = \frac{\Delta P[w]}{\Delta V[v]}$$

FIG. 7

FIG. 8

FIG. 9

FIG. 10

FIG. 11

```
┌─────────────────────────────────────┐
│     INPUT REQUIRED POWER VALUE       │──S1101
└─────────────────────────────────────┘
                  │
                  ▼
┌─────────────────────────────────────┐
│    INPUT REFERENCE VOLTAGE VALUE     │──S1102
└─────────────────────────────────────┘
                  │
                  ▼
┌─────────────────────────────────────┐
│     CALCULATE CHARGING/DISCHARGING   │──S1103
│ MODE DETERMINATION THRESHOLD VOLTAGE │
└─────────────────────────────────────┘
                  │
                  ▼
┌─────────────────────────────────────┐
│           CALCULATE SLOPE            │──S1104
└─────────────────────────────────────┘
                  │
                  ▼
┌─────────────────────────────────────┐
│       INPUT LINK VOLTAGE VALUE       │──S1105
└─────────────────────────────────────┘
                  │
                  ▼
┌─────────────────────────────────────┐
│     CALCULATE OUTPUT POWER VALUE     │──S1106
└─────────────────────────────────────┘
                  │
                  ▼
┌─────────────────────────────────────┐
│    CALCULATE TARGET CURRENT VALUE    │──S1107
└─────────────────────────────────────┘
                  │
                  ▼
┌─────────────────────────────────────┐
│    OUTPUT TARGET CURRENT VALUE       │──S1108
└─────────────────────────────────────┘
```

FIG. 12

Charging Level : 410~390V
Discharging Level : 380~360V

Charging Level : 450~400V
Discharging Level : 390~340V

Charging Level : 410~390V
Discharging Level : 380~360V

Charging Level : 450~400V
Discharging Level : 390~340V

## INTERNATIONAL SEARCH REPORT

| International application No. |
| --- |
| **PCT/KR2021/011656** |

| A. | CLASSIFICATION OF SUBJECT MATTER |
| --- | --- |

**H02M 3/00**(2006.01)i; **H02M 1/14**(2006.01)i; **H02J 3/32**(2006.01)i; **H02J 7/00**(2006.01)i; **H02M 1/00**(2007.01)i

According to International Patent Classification (IPC) or to both national classification and IPC

| B. | FIELDS SEARCHED |
| --- | --- |

Minimum documentation searched (classification system followed by classification symbols)

H02M 3/00(2006.01); H02J 1/10(2006.01); H02J 13/00(2006.01); H02J 3/32(2006.01); H02J 3/38(2006.01); H02J 3/46(2006.01); H02M 7/48(2007.01); H02M 7/493(2007.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 인버터(inverter), 드룹 제어(droop control), 임계 전압(threshold voltage), 캐패시터(capacitor), 기준 전압(reference voltage), 기울기(slope)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2019-0090433 A (LG INNOTEK CO., LTD.) 02 August 2019 (2019-08-02)<br>  See paragraphs [0059]-[0110] and figures 3-17. | 1-10 |
| A | WO 2018-150681 A1 (PANASONIC INTELLECTUAL PROPERTY MANAGEMENT CO., LTD.) 23 August 2018 (2018-08-23)<br>  See paragraphs [0010]-[0049] and figures 1-5. | 1-10 |
| A | KR 10-2019-0118436 A (KOREA ELECTRIC POWER CORPORATION et al.) 18 October 2019 (2019-10-18)<br>  See claims 1-5 and figures 1-6. | 1-10 |
| A | US 2017-0194792 A1 (ENPHASE ENERGY, INC.) 06 July 2017 (2017-07-06)<br>  See paragraphs [0017]-[0060] and figures 1-5. | 1-10 |
| A | WO 2018-122726 A1 (ELECTRO POWER SYSTEMS MANUFACTURING S.R.L.) 05 July 2018 (2018-07-05)<br>  See claims 1-3 and figures 1-7. | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **29 November 2021** | **29 November 2021** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT
### Information on patent family members

| International application No. |
|---|
| **PCT/KR2021/011656** |

| Patent document cited in search report | | | Publication date (day/month/year) | Patent family member(s) | | | Publication date (day/month/year) |
|---|---|---|---|---|---|---|---|
| KR | 10-2019-0090433 | A | 02 August 2019 | CN | 111630762 | A | 04 September 2020 |
| | | | | EP | 3731394 | A1 | 28 October 2020 |
| | | | | JP | 2021-509002 | A | 11 March 2021 |
| | | | | KR | 10-2019-0076574 | A | 02 July 2019 |
| | | | | KR | 10-2019-0090432 | A | 02 August 2019 |
| | | | | US | 2020-0321880 | A1 | 08 October 2020 |
| | | | | WO | 2019-124678 | A1 | 27 June 2019 |
| | | | | WO | 2019-146899 | A1 | 01 August 2019 |
| | | | | WO | 2019-146900 | A1 | 01 August 2019 |
| WO | 2018-150681 | A1 | 23 August 2018 | JP | 6771164 | B2 | 21 October 2020 |
| | | | | JP | WO2018-150681 | A1 | 21 November 2019 |
| KR | 10-2019-0118436 | A | 18 October 2019 | KR | 10-2078453 | B1 | 19 February 2020 |
| US | 2017-0194792 | A1 | 06 July 2017 | CN | 108370162 | A | 03 August 2018 |
| | | | | KR | 10-2018-0091819 | A | 16 August 2018 |
| | | | | US | 10516270 | B2 | 24 December 2019 |
| | | | | US | 2020-0127459 | A1 | 23 April 2020 |
| | | | | WO | 2017-120331 | A1 | 13 July 2017 |
| WO | 2018-122726 | A1 | 05 July 2018 | CN | 108246593 | A | 06 July 2018 |
| | | | | CN | 108246593 | B | 09 February 2021 |
| | | | | CN | 108249382 | A | 06 July 2018 |
| | | | | CN | 108249387 | A | 06 July 2018 |
| | | | | CN | 108254609 | A | 06 July 2018 |
| | | | | CN | 110087871 | A | 02 August 2019 |
| | | | | CN | 110099751 | A | 06 August 2019 |
| | | | | CN | 110099751 | B | 26 February 2021 |
| | | | | CN | 110099787 | A | 06 August 2019 |
| | | | | CN | 110099787 | B | 27 August 2021 |
| | | | | CN | 110114152 | A | 09 August 2019 |
| | | | | CN | 110114207 | A | 09 August 2019 |
| | | | | CN | 110121409 | A | 13 August 2019 |
| | | | | CN | 110313111 | A | 08 October 2019 |
| | | | | CN | 110430982 | A | 08 November 2019 |
| | | | | CN | 110430982 | B | 30 March 2021 |
| | | | | EP | 3562595 | A1 | 06 November 2019 |
| | | | | EP | 3562595 | B1 | 04 August 2021 |
| | | | | EP | 3562599 | A1 | 06 November 2019 |
| | | | | EP | 3562599 | B1 | 21 July 2021 |
| | | | | EP | 3562639 | A1 | 06 November 2019 |
| | | | | EP | 3562639 | B1 | 27 January 2021 |
| | | | | EP | 3562657 | A1 | 06 November 2019 |
| | | | | EP | 3562657 | B1 | 06 January 2021 |
| | | | | EP | 3562659 | A1 | 06 November 2019 |
| | | | | EP | 3562659 | B1 | 02 June 2021 |
| | | | | EP | 3562660 | A1 | 06 November 2019 |
| | | | | EP | 3562660 | B1 | 06 January 2021 |
| | | | | EP | 3563464 | A1 | 06 November 2019 |
| | | | | IT | 201600131538 | A1 | 28 June 2018 |
| | | | | IT | 201600131820 | A1 | 28 June 2018 |
| | | | | IT | 201600131842 | A1 | 28 June 2018 |
| | | | | IT | 201600131878 | A1 | 28 June 2018 |

Form PCT/ISA/210 (patent family annex) (July 2019)

INTERNATIONAL SEARCH REPORT
Information on patent family members

International application No.

**PCT/KR2021/011656**

| Patent document cited in search report | Publication date (day/month/year) | Patent family member(s) | | Publication date (day/month/year) |
|---|---|---|---|---|
| | | JP | 2020-503831 A | 30 January 2020 |
| | | JP | 2020-514025 A | 21 May 2020 |
| | | KR 10-2019-0098250 A | | 21 August 2019 |
| | | US | 10197794 B2 | 05 February 2019 |
| | | US | 10310253 B2 | 04 June 2019 |
| | | US | 10576500 B2 | 03 March 2020 |
| | | US | 10649202 B2 | 12 May 2020 |
| | | US | 10946400 B2 | 16 March 2021 |
| | | US | 10987887 B2 | 27 April 2021 |
| | | US | 11128141 B2 | 21 September 2021 |
| | | US | 2018-0178251 A1 | 28 June 2018 |
| | | US | 2018-0180649 A1 | 28 June 2018 |
| | | US | 2018-0180871 A1 | 28 June 2018 |
| | | US | 2018-0180873 A1 | 28 June 2018 |
| | | US | 2019-0121122 A1 | 25 April 2019 |
| | | US | 2019-0321831 A1 | 24 October 2019 |
| | | US | 2019-0321840 A1 | 24 October 2019 |
| | | US | 2019-0341781 A1 | 07 November 2019 |
| | | US | 2019-0358922 A1 | 28 November 2019 |
| | | US | 2019-0366661 A1 | 05 December 2019 |
| | | US | 2020-0346423 A1 | 05 November 2020 |
| | | US | 2021-0129470 A1 | 06 May 2021 |
| | | US | 2021-0129565 A1 | 06 May 2021 |
| | | US | 2021-0268757 A1 | 02 September 2021 |
| | | WO | 2018-122007 A1 | 05 July 2018 |
| | | WO | 2018-122264 A1 | 05 July 2018 |
| | | WO | 2018-122643 A1 | 05 July 2018 |
| | | WO | 2018-122644 A1 | 05 July 2018 |
| | | WO | 2018-122645 A1 | 05 July 2018 |
| | | WO | 2018-122646 A1 | 05 July 2018 |
| | | WO | 2018-122710 A1 | 05 July 2018 |
| | | WO | 2018-122712 A1 | 05 July 2018 |
| | | WO | 2018-122717 A1 | 05 July 2018 |
| | | WO | 2018-122737 A1 | 05 July 2018 |
| | | WO | 2018-122753 A1 | 05 July 2018 |
| | | WO | 2018-122760 A1 | 05 July 2018 |
| | | WO | 2018-122762 A1 | 05 July 2018 |
| | | WO | 2018-122772 A1 | 05 July 2018 |
| | | WO | 2018-122882 A1 | 05 July 2018 |
| | | WO | 2018-122882 A8 | 25 July 2019 |

Form PCT/ISA/210 (patent family annex) (July 2019)